# EUROPÄISCHE PATENTSCHRIFT

(11) **EP 0 589 177 B1**
(45) Veröffentlichungstag und Bekanntmachung des Hinweises auf die Patenterteilung: **24.04.1996**
(21) Anmeldenummer: 93112019.0
(22) Anmeldetag: 28.07.1993
(51) Int. Cl.: G02B 23/02, G02B 23/06, G02B 7/04

(54) **Monokulares Fernrohr konstanter Länge**
Monocular telescope having constant length
Télescope monoculair à longueur constante

(30) Priorität: 22.09.1992 DE 4231655
(43) Veröffentlichungstag der Anmeldung: 30.03.1994
(73) Patentinhaber: Leica Camera GmbH, D-35606 Solms (DE)
(72) Erfinder: Kölsch, Lothar, D-57234 Wilnsdorf (DE); Hengst, Alfred, D-35633 Lahnau (DE); Keiner, Heinz, D-35606 Solms (DE)
(74) Vertreter: Stamer, Harald, Dipl.-Phys.

(56) Entgegenhaltungen:
- CH-A- 499 119
- DE-B- 1 243 405
- Sov. J. Opt. Technol., Vol. 43, No. 6, June 1976, P. 360-361, B. L. Nefedov et al. : "Telescope with two magnifications"

## Beschreibung

Die Erfindung betrifft ein monokulares Fernrohr konstanter Länge gemäß dem Oberbegriff des Anspruchs 1 (Siehe Sov. J. Opt. Technol., Vol. 43, No. 6, P. 360; Juni 1976).

Aus der DE-OS 20 05 396 ist ein Fernrohr mit einer Fokussiervorrichtung bekannt, bei dem ein drehbarer Fokussiertrieb auf ein im Tubus des Fernrohrs axial verschiebbares Fokussierglied wirkt. Als getriebliche Verbindung zwischen dem Fokussiertrieb und dem Fokussierglied ist ein Exzenter mit einer in sich geschlossenen Gleitfläche vorgesehen. Auf diese Weise wird bei gleichbleibender Drehrichtung des Fokussiertriebes der gesamte Fokussierbereich mit einer halben bis einer ganzen Umdrehung des Fokussiertriebes erfaßt. Zur Über- oder Untersetzung des durch den Exzenter erzielten Verschiebungsbetrages ist zwischen diesem und dem Fokussierglied ein Übersetzungsgetriebe angeordnet. Dieses bekannte Fernrohr weist eine konstante Vergrößerung und ein feststehendes Okular auf.

Aus der DE-PS 1 109 398 ist ein Teleskop mit veränderbarer Vergrößerung bekannt, dessen Okularrohr je nach der gewählten Vergrößerung auf verschiedene Weiten ausgezogen wird. Das Okularrohr ist in einer Kurvenhülse mit einem Kurvenschlitz zur zwangsläufigen Drehung beim Verändern des Auszuges geführt und längsverschiebbar, jedoch relativ unverdrehbar mit dem Träger eines Umkehrsystems gekuppelt, der seinerseits mit einem zweiten Kurvenschlitz zur zwangsläufigen Verschiebung beim Verdrehen in der Kurvenhülse geführt ist. Dadurch sind auch starke Änderungen in der Fernrohrvergrößerung erreichbar. Die Scharfeinstellung erfolgt mittels einer Feineinstellmutter, wobei die einmal für eine bestimmte Entfernung eingestellte Schärfe über den gesamten Vergrößerungsbereich kontinuierlich erhalten bleibt.

Aus der US-PS 3 028 792 ist weiterhin ein Teleskop mit kontinuierlich veränderbarer Vergrößerung bekannt, das zwei in einer Gehäusevertiefung angeordnete, durch einen Steg getrennte, koaxiale Drehknöpfe aufweist. Der objektivseitige Drehknopf verschiebt über eine Gewindespindel eine Fokussierlinse zum Zwecke der Scharfstellung, während der okularseitige Drehknopf der Änderung der Vergrößerung mittels zweier axial verschiebbarer Umkehrlinsen dient, deren Bewegungsablauf durch spiralförmige Nocken gesteuert ist.

Schließlich ist ein Fernrohr gemäß dem Oberbegriff des Anspruchs 1 bekannt Bei diesem Fernrohr ist durch ein Wechselokular zum einen eine stufenweise Veränderung der Vergrößerung, beispielsweise 20-, 30- und 40-fach, oder zum anderen bei Verwendung eines Zoomokulars auch eine stufenlose Vergrößerungseinstellung erzielbar, beispielsweise 20-60fach. Die Scharfstellung erfolgt manuell mittels eines Bedienungsknopfes, dessen Drehbewegung eine axiale Verschiebung eines Fokussierelementes bewirkt. Aufgrund der bei hohen Vergrößerungen vorliegenden geringen Schärfentiefe ist es schwierig, in diesem Fall das Fernrohr scharfzustellen, da die Schärfenebene beim Einstellen mittels einer unveränderbaren Verbindung zwischen Bedienungsknopf und Fokussierelement zu schnell durchfahren wird. Ähnliches gilt in umgekehrtem Maße bei niedrigen Vergrößerungen, weswegen die Verstellgeschwindigkeit auf einen Mittelwert ausgelegt ist.

Der Erfindung liegt die Aufgabe zugrunde, ein monokulares Fernrohr der eingangs genannten Art so weiterzubilden, daß für unterschiedliche Vergrößerungen optimale Einstellbedingungen geschaffen werden.

Diese Aufgabe wird erfindungsgemäß mit den kennzeichnenden Merkmale des Anspruchs 1 gelöst. Vorteilhafte Weiterbildungen der Erfindung ergeben sich aus den Unteransprüchen.

Weitere Einzelheiten der Erfindung sind aus der nachfolgenden Beschreibung von in der Zeichnung schematisch dargestellten Ausführungsbeispielen ersichtlich. Dabei sind alle zum Verständnis der Erfindung nicht erforderlichen Bauteile weggelassen.

Es zeigen:
- Fig. 1: einen Längsschnitt durch das erfindungsgemäße Fernrohr in einer ersten Ausführungsform,
- Fig. 2: einen Querschnitt mit Einzelheiten des Getriebes gemäß Fig. 1 und
- Fig. 3: einen Längsschnitt durch ein Getriebe in einer zweiten Ausführungsform.

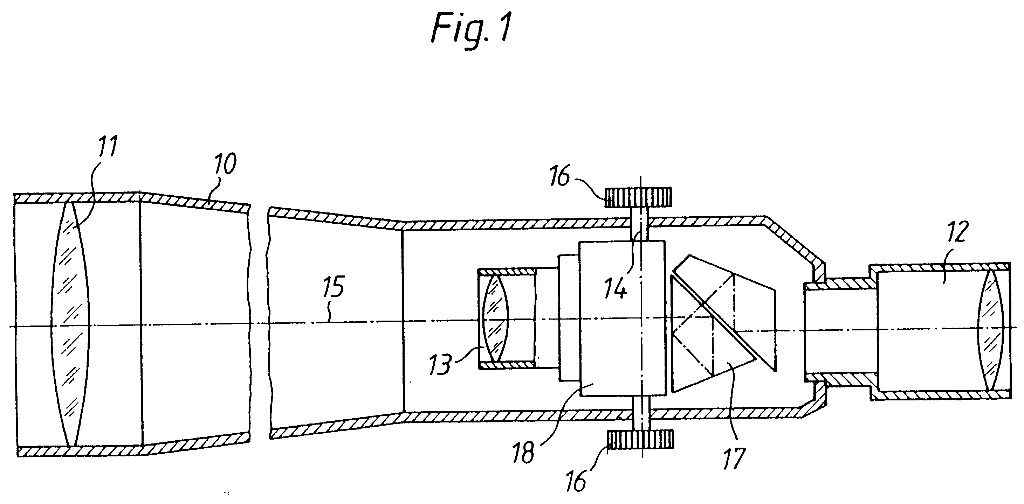

Das in Fig. 1 dargestellte monokulare Fernrohr weist einen hier verkürzt gezeichneten Tubus 10 auf, der ein Objektiv 11 trägt. Ein diesem gegenüberliegendes Okular ist als Wechselokular 12 ausgebildet, mit dem die Vergrößerung wählbar ist. Das Wechselokular 12 kann als Variookular mit stufenlos veränderbarer Vergrößerung, beispielsweise von 20-60fach ausgebildet sein, oder es können einzelne Okulare unterschiedlicher Vergrößerung, beispielsweise 20-, 40- und 60fach, verwendet werden. Zur Scharfstellung ist eine Fokussiereinheit 13 aus einem Linsensystem vorgesehen, die mittels eines Stellgliedes 14 entlang der optischen Achse 15 des Fernrohrs verschiebbar ist. Das Stellglied 14 trägt an beiden Enden Rändelknöpfe 16. Weiterhin ist im Tubus 10 zur Umlenkung des Strahlenganges zwischen der Fokussiereinheit 13 und dem Wechselokular 12 ein Prismensatz 17 befestigt. Das Stellglied 14 ist als Übersetzungsgetriebe 18 ausgebildet, das in Fig. 1 nur schematisch gezeigt ist.

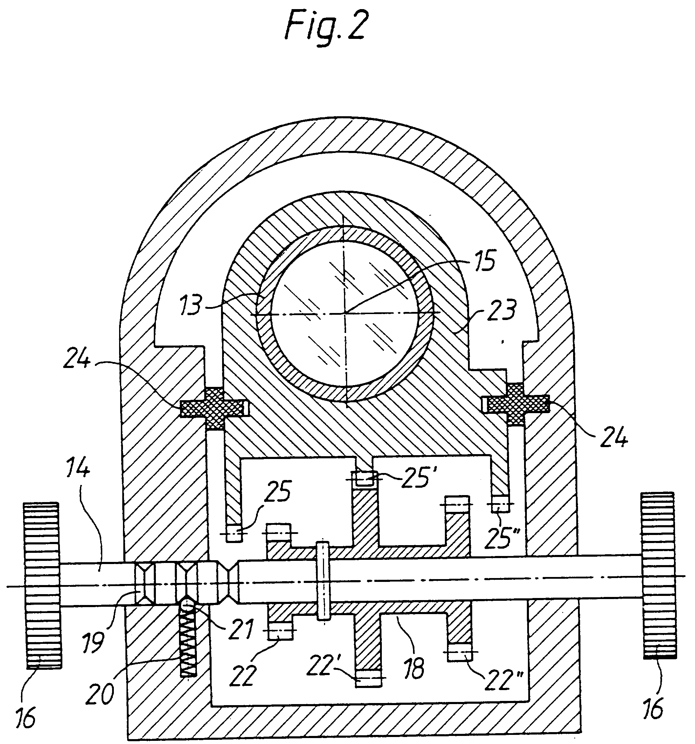

In Fig. 2 ist die Ausbildung des Übersetzungsgetriebes 18 in einer ersten Ausführungsform dargestellt. Auf dem als Drehachse mit einem Rastgesperre aus Rastkerben 19, Feder 20 und Kugel 21 ausgebildeten Stellglied 14 sind Zahnräder 22,22',22'' unterschiedlichen Durchmessers montiert. Oberhalb des Stellglieds 14 ist ein Schlitten 23 längs der optischen Achse 15 in Führungsbahnen 24 verschiebbar, der die Fokussiereinheit 13 trägt. An seiner Unterseite weist der Schlitten 23 Zahnstangen 25,25',25'' auf, die durch Herausziehen bzw. Eindrücken des Stellgliedes 14 in Eingriff mit den entsprechenden Zahnrädern 22,22',22'' bringbar sind. Entsprechend der Vergrößerung des verwendeten Wechselokulars 12 ist die Stellgeschwindigkeit für die Scharfstellung mittels des Übersetzungsgetriebes in drei Stufen angepaßt.

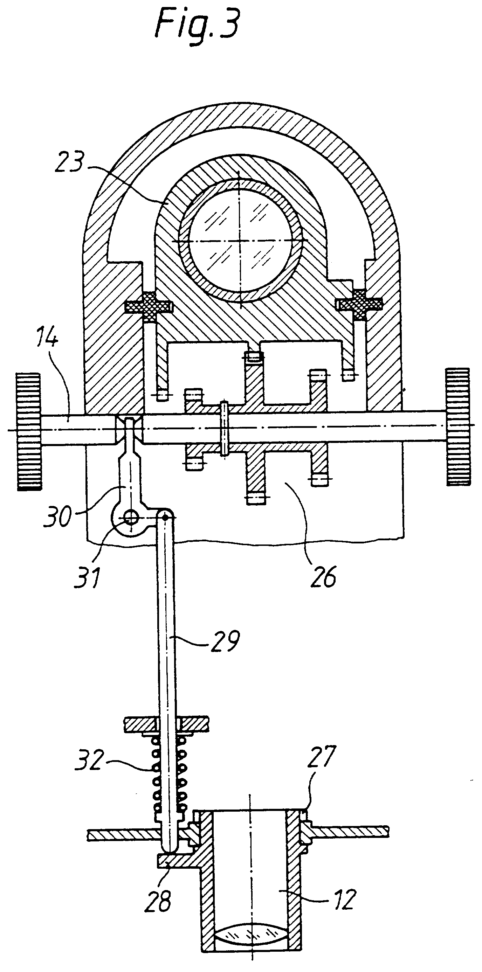

Die in Fig. 3 gezeigte Ausführungsform unterscheidet sich von derjenigen gem. Fig. 2 dadurch, daß hier ein Übersetzungsgetriebe 26 verwendet ist, das mit dem jeweiligen Wechselokular 12 getrieblich verbunden ist. Dadurch wird erreicht, daß beim Wechsel des Okulars 12 die dessen Vergrößerung entsprechende Stellgeschwindigkeit für die Scharfstellung selbsttätig angepaßt wird. Das Wechselokular 12 ist am Fernrohr mittels eines Bajonetts 27 befestigbar, das hier einen Bund 28 aufweist, dessen axiale Tiefe je nach Vergrößerung variiert. An dem Bund 28 liegt ein Ende eines Steuerstifts 29 an, dessen anderes Ende mit einem Winkelhebel 30 verbunden ist. Dieser ist um eine Achse 31 schwenkbar und greift am Stellglied 14 an. Unter dem Druck einer Feder 32 wird der Steuerstift 29 je nach Lage des Bundes 28 am Bajonett 27 axial verschoben, wobei der Winkelhebel 30 diese Bewegung in eine dazu senkrechte Verschiebung des Stellglieds 14 übersetzt.Das auf demselben angeordnete Übersetzungsgetriebe 26 nebst Schlitten 23 entspricht im wesentlichen demjenigen von Fig.. 2, weswegen die gleichen Bezugszeichen verwendet sind.

Es versteht sich, daß zahlreiche Variationen des Beschriebenen möglich sind. So kann bei einem Wechselokular mit veränderlicher Vergrößerung anstatt eines Bundes eine Steuerkurve angeformt sein, an welcher der Steuerstift anliegt.

Bei einer nur für zwei unterschiedliche Vergrößerungen ausgelegten Anordnung kann ein koaxialer Grob-Feintrieb Verwendung finden, wie er an sich zur Scharfeinstellung besonders bei Mikroskopen bekannt ist. Weiterhin kann die manuelle Verstellung durch eine motorische ersetzt sein, wobei anstelle der Rändelknöpfe ein Bedienungsknopf vorgesehen ist. Schließlich kann auch das Fokussierelement anders ausgebildet sein, beispielsweise als Prismensatz. Dieser kann auf einer Zahnstange montiert sein, welche mittels eines auf dem Stellglied befestigten Zahnrades axial bewegt wird.

## Patentansprüche

1. Monokulares Fernrohr konstanter Länge mit einem in einem Tubus (10) angeordneten Objektiv (11), einem auswechselbaren oder einem variablen Okular (12) zur Veränderung der Vergrößerung und einer mittels eines Stellgliedes (14) im Tubus verschiebbaren Fokussiereinheit, **dadurch gekennzeichnet**, daß zur Anpassung der Stellgeschwindigkeit der Fokussiereinheit (13) an die gewählte Vergrößerung das Stellglied (14) als Übersetzungsgetriebe (18,26) mit mehreren, verschiedenen, je nach benutzter Vergrößerung wählbaren Übersetzungen ausgebildet ist, wobei in Verbindung mit einer hohen Vergrößerung eine kleinere Übersetzung und umgekehrt wählbar ist.

2. Monokulares Fernrohr nach Anspruch 1, **dadurch gekennzeichnet**, daß auf dem Stellglied (14) Zahnräder (22,22',22") unterschiedlichen Durchmessers montiert sind, die durch Verschieben des Stellgliedes (14) quer zur optischen Achse (15) mit Zahnstangen (25,25'25") in Eingriff bringbar sind, welche an einem die Fokussiereinheit (13) tragenden Schlitten (23) befestigt sind.

3. Monokulares Fernrohr nach Anspruch 1, **dadurch gekennzeichnet**, daß das Stellglied (14) mit dem Okular (12) getrieblich derart verbunden ist, daß bei einem Vergrößerungswechsel durch Verschieben des Stellglieds (14) eine selbsttätige Umschaltung des Übersetzungsgetriebe (18,26) erfolgt.

4. Monokulares Fernrohr nach Anspruch 3, **dadurch gekennzeichnet**, daß das Okular (12) mit einem Bund (28) versehen ist, dessen axiale Tiefe je nach Vergrößerung variiert, an dem Bund (28) ein Ende eines Steuerstiftes (29) anliegt, dessen anderes Ende mit einem um eine Achse (31) schwenkbaren Winkelhebel (30) verbunden ist, welcher am Stellglied (14) angreift, wobei der Steuerstift (29) je nach Lage des Bundes (28) axial verschoben wird und der Winkelhebel (30) diese Bewegung in eine Verschiebung des Stellgliedes (14) übersetzt.

5. Monokulares Femrohr nach Anspruch 1, **dadurch gekennzeichnet**, daß als Fokussiereinheit (13) ein Linsensystem vorgesehen ist.

6. Monokulares Femrohr nach Anspruch 1, **dadurch gekennzeichnet**, daß als Fokussiereinheit (13) ein Prismensystem vorgesehen ist.

## Claims

1. Monocular telescope of constant length with an objective (11) arranged in a tube (10), an exchangeable and/or a variable eyepiece (12) for varying the magnification and a focussing unit which is displaceable in the tube by means of a setting member (14), characterised thereby, that for adaptation of the setting speed of the focussing unit (13) to the chosen magnification, the setting member (14) is constructed as transmission gear (18, 26) with several different transmission ratios which are selectable according to the selected magnification used, wherein a smaller transmission ratio is selectable in conjunction with a high magnification and conversely.

2. Monocular telescope according to claim 1, characterised thereby, that gear wheels (22, 22', 22") of different diameters are mounted on the setting member (14) and bringable into engagement with toothed racks (25, 25', 25"), which are fastened at a sliding carriage (23) carrying the focussing unit (13), by displacement of the setting member (14) transversely to the optical axis (15).

3. Monocular telescope according to claim 1, characterised thereby, that the setting member (14) is connected in geared manner with the eyepiece (12) in such a manner that an automatic switching-over of the transmission gear (18, 26) takes place by displacement of the setting member (14) on a change in magnification.

4. Monocular telescope according to claim 3, characterised thereby, that the eyepiece (12) is provided with a colalr (28), the axial depth of which varies in accordance with the magnification, one end of a control pin (29) lies against the collar (28) and the other end of the control pin (29) is connected with an angle lever (30), which is pivotable about an axis (31) and engages at the setting member (14), wherein the control pin (29) is displaced axially in accordance with the position of the collar (28) and the angle lever (30) translates this movement into a displacement of the setting member (14).

5. Monocular telescope according to claim 1, characterised thereby, that a lens system is provided as focussing unit (13).

6. Monocular telescope according to claim 1, characterised thereby, that a prism system is provided as focussing unit (13).

## Revendications

1. Télescope monoculaire de longueur constante, comprenant un objectif (11) disposé dans un tube (10), un oculaire échangeable ou variable (12) pour la modification de l'agrandissement et une unité de focalisation déplaçable dans le tube à l'aide d'un organe d'ajustage (14), caractérisé en ce que, pour l'adaptation de la vitesse d'ajustage de l'unité de focalisation (13) à l'agrandissement choisi, l'organe d'ajustage (14) est réalisé sous forme d'un engrenage (18, 28) avec plusieurs multiplications différentes pouvant être choisis selon l'agrandissement utilisé, une plus faible multiplication pouvant être choisie en relation avec un agrandissement plus important, et inversement.

2. Télescope monoculaire selon la revendication 1, caractérisé en ce que des roues dentées (22, 22', 22") de diamètres différent sont montées sur l'organe d'ajustage (14), qui peuvent être amenées en engagement, par déplacement de l'organe d'ajustage (14) perpendiculairement à l'axe optique (15), avec des crémaillères (25, 25', 25") qui sont fixées à un coulisseau (23) portant l'unité de focalisation (13).

3. Télescope monoculaire selon la revendication 1, caractérisé en ce que l'organe d'ajustage (14) est relié à l'oculaire (12) pour un entraînement, de façon que, lors d'un changement de l'agrandissement par déplacement de l'organe d'ajustage (14) une commutation automatique de l'engrenage (18, 26) s'effectue.

4. Télescope monoculaire selon la revendication 3, caractérisé en ce que l'oculaire (12) est pourvu d'un collet (28) dont la profondeur axiale varie en fonction de l'agrandissement, au collet (28) est appliquée une extrémité d'une goupille de commande (29) dont l'autre extrémité est reliée à un levier coudé (30) pivotant autour d'un axe (31) et qui attaque l'organe d'ajustage (14), la goupille de commande (29) étant déplacée axialement en fonction de la position du collet (28) et le levier coudé (30) convertit ce mouvement en un déplacement de l'organe d'ajustage (14).

5. Télescope monoculaire selon la revendication 1, caractérisé en ce qu'un système de lentilles est prévu comme unité de focalisation (13).

6. Télescope monoculaire selon la revendication 1, caractérisé en ce qu'un système de primes est prévu comme unité de focalisation (13).
